# EUROPÄISCHE PATENTSCHRIFT

(11) **EP 3 617 040 B1**
(45) Veröffentlichungstag und Bekanntmachung des Hinweises auf die Patenterteilung: **20.07.2022**
(21) Anmeldenummer: 19192466.1
(22) Anmeldetag: 20.08.2019
(51) Int. Cl.: B62D 25/08, B62D 25/14, B62D 33/06, B62D 65/04

(54) **FAHRERHAUSFRONTMODUL UND VERFAHREN ZUR HERSTELLUNG EINES FAHRERHAUSES**
DRIVER'S CAB FRONT MODULE AND METHOD FOR PRODUCING A DRIVER'S CAB
MODULE AVANT DE CABINE DE CONDUCTEUR ET PROCÉDÉ DE FABRICATION D'UNE CABINE DE CONDUCTEUR

(30) Priorität: 30.08.2018 DE 102018121211
(43) Veröffentlichungstag der Anmeldung: 04.03.2020
(73) Patentinhaber: MAN Truck & Bus SE, 80995 München (DE)
(72) Erfinder: Rohrmüller, Hans, 82216 Maisach (DE); Burger, Norbert, 84030 Ergolding (DE); Möller, Andreas, 36145 Hofbieber (DE)
(74) Vertreter: v. Bezold & Partner Patentanwälte - PartG mbB

(56) Entgegenhaltungen:
- WO-A1-2006/071160
- DE-A1- 10 118 344
- DE-A1- 19 513 089
- DE-B- 1 090 980
- DE-T2- 60 009 899
- GB-A- 1 225 304
- US-A- 5 863 093

## Beschreibung

Die Erfindung betrifft ein Fahrerhausfrontmodul für ein Fahrerhaus eines Nutzfahrzeugs und ein Verfahren zur Herstellung eines Fahrerhauses eines Nutzfahrzeugs.

Fahrerhäuser bzw. Fahrerkabinen von Lastkraftwagen werden üblicherweise mit einer geschlossenen Strukturzelle gebildet, die in weiteren Schritten mit Komponenten vervollständigt wird, die an der Strukturzelle außen oder innen angebracht werden. Dies erzwingt ein Einbringen von großen Einzelkomponenten oder Vormontagebaugruppen über die vorhandenen Öffnungen der Strukturzelle, wie beispielsweise die Türausschnitte oder den Frontscheibenausschnitt. Aufgrund der nutzbaren Öffnungen in der Tragstruktur zum Einbringen von Komponenten sind diese in der Größe beschränkt. Mit zunehmender Größe der Komponenten steigt zunehmend die Beschädigungsgefahr der Fahrerkabine durch ein eventuelles Anstoßen der Bauteile beim Einbringen in die Fahrerkabine. Aufgrund der räumlichen Gegebenheiten bei der Montage von Komponenten innerhalb der Fahrerkabine sind daher hinsichtlich der Montageergonomie Kompromisse einzugehen.

In der DE 195 13 089 A1 wird eine Fahrerhauskabine beschrieben, die über eine Rückwand, Seitenwände, Boden und Dach verfügt und dann mit einem separat ausgestatteten Fahrerhausfrontmodul vervollständigt wird, an welchem mehrere Komponenten vor der Montage des Fahrerhausfrontmoduls an diesem vorgruppiert werden.

Die WO 92/07749 A1 offenbart eine Robotermontage eines Lastkraftwagens. Die Robotermontage des Lastkraftwagens erfolgt durch die Montage eines Armaturenbretts und eines Kabelbaums in ein Vorderteil über ein offenes hinteres Ende davon, während die Sitze und ein Kabelbaum in ein Hinterteil über ein offenes vorderes Ende davon mit Robotermitteln montiert werden. Im Vorderteil des Lastkraftwagens wird kein Boden montiert. Anschließend werden die Teile ausgerichtet und durch Kleben verbunden. Für die aufwändige Verkabelung und Verdrahtung werden entsprechende Leiterplattenanschlusstechniken eingesetzt.

Die DE 101 18 344 A1 betrifft eine modular aufgebaute Fahrerhaus-Baureihe für Lastkraftwagen zur Ausbildung von Fahrerhaus-Varianten unterschiedlicher Längenabmessungen, mit einem bei allen Fahrerhaus-Varianten einheitlich aufgebauten Grundmodul und mit einem daran anbaubaren Anbaumodul, das für jede Fahrerhaus-Variante unterschiedliche Längenabmessungen aufweist. Das Grundmodul weist eine Vorderwand, zwei Seitenwände mit Tür und Türrahmen, einen Boden und ein Dach auf, ist nach hinten offen ausgebildet und besitzt hinten einen ringförmig geschlossenen ersten Anflanschbereich. Das Anbaumodul weist eine Rückwand, zwei Seitenwandabschnitte, einen Bodenabschnitt und einen Dachabschnitt auf, ist nach vorn offen ausgebildet und besitzt vorn einen ringförmig geschlossenen, zum ersten Anflanschbereich komplementären zweiten Anflanschbereich. Beim Anbaumodul weisen die Seitenwandabschnitte, der Bodenabschnitt und der Dachabschnitt für jede Fahrerhaus-Variante unterschiedliche Längenmessungen auf.

Die DE 600 09 899 T2 betrifft eine Armaturenbrettverstärkungsanordnung zur Verwendung in einem unteren vorderen Bereich einer Kabine bzw. eines Führerhauses eines mobilen Fahrzeuges.

Die US 5,863,093 A offenbart eine Brandschutz-Armaturenbrettbaugruppe. Die Brandschutz-Armaturenbrett-Baugruppe wird vor der Montage an der Lastkraftwagenkabine konstruiert. Ein Vorderwandabschnitt der Brandschutz-Armaturenbrett-Baugruppe wird hierzu an vorstehenden Längsträgern eines Bodens der Lastkraftwagenkabine angebracht.

Der Erfindung liegt die Aufgabe zu Grunde, ein alternatives und/oder verbessertes Fahrerhausfrontmodul zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft ein Fahrerhausfrontmodul für ein Fahrerhaus eines Nutzfahrzeugs (z. B. Lastkraftwagen). Das Fahrerhausfrontmodul ist vorzugsweise (z. B. separat zu einem Fahrerhaushauptmodul des Fahrerhauses) vorgefertigt und/oder vormontiert. Das Fahrerhausfrontmodul weist eine (z. B. im Wesentlichen vertikal ausgerichtete) Fahrerhausvorderwandstruktur und eine (z. B. im Wesentlichen horizontal ausgerichtete) Fahrerhausteilbodenstruktur auf. Die Fahrerhausteilbodenstruktur ist mit der Fahrerhausvorderwandstruktur verbunden, bildet teilweise einen Fahrerhausboden und weist eine Trägerkonstruktion mit mindestens einem Anbringungsbereich zur tragenden Anbringung des Fahrerhausfrontmoduls an eine weitere Fahrerhausteilbodenstruktur des Fahrerhauses auf.

Die vorliegende Offenbarung beschreibt somit ein Fahrerhausfrontmodul, das als ein Front- und Teilbodenmodul ausgeführt ist, welches zweckmäßig sowohl die vorwiegend vertikal ausgerichtete Kabinenfront als Fahrerhausvorderwandstruktur als auch einen vorderen Teilbereich des Kabinenbodens als Fahrerhausteilbodenstruktur aufweist. Dadurch ergeben sich bei der Montage von Komponenten an dem Fahrerhausfrontmodul, die unabhängig vom restlichen Teil des Fahrerhauses ausgeführt wird, neue Freiheitsgrade, mit der Möglichkeit einer erheblichen Optimierung der Ergonomie und der Montagezeiten. Zweckmäßig können weitere wesentliche Komponenten des Fahrerhauses in das vorgefertigte und vormontierte Fahrerhausfrontmodul aufgenommen werden, insbesondere solche, die zumindest teilweise an oder in der Fahrerhausteilbodenstruktur angebracht sind. Dies können beispielsweise eine Lenkgelenkwelle oder ein Lenkwinkelgetriebe sein.

Zweckmäßig kann ein Anbringungsbereich einen oder mehrere Verschraubungspunkte, Verklebungspunkte und/oder Schweißpunkte aufweisen.

In einem Ausführungsbeispiel weist die Trägerkonstruktion einen oder mehrere Längsträger, und/oder Querträger und/oder eines oder mehrere Tragbleche auf.

Zweckmäßig kann hierin unter einem Tragblech eine tragende Blechstruktur, z. B. in Form eines tragenden Blechpressteils, des Fahrerhausfrontmoduls verstanden werden, die dazu geeignet ist, das Fahrerhausfrontmodul tragend an eine weitere Fahrerhausteilbodenstruktur des Fahrerhauses anzubringen.

In einem weiteren Ausführungsbeispiel ist der mindestens eine Anbringungsbereich an einem freien Ende der Trägerkonstruktion und/oder an einem der Fahrerhausvorderwandstruktur entgegengesetzten Ende der Trägerkonstruktion angeordnet.

Es ist möglich, dass der mindestens eine Anbringungsbereich bspw. durch mehrere Schraubenlöcher gebildet ist.

In einem weiteren Ausführungsbeispiel weist das Fahrerhausfrontmodul ferner mindestens eine Ausstattungskomponente auf, die in oder an der Fahrerhausteilbodenstruktur und/oder der Trägerkonstruktion angebracht ist. Dies wird dadurch ermöglicht, dass das Fahrerhausfrontmodul nunmehr die Fahrerhausteilbodenstruktur umfasst.

In einer Ausführungsform weist das Fahrerhausfrontmodul ein Lenkwinkelgetriebe auf, das an der Fahrerhausteilbodenstruktur angebracht ist.

In einer weiteren Ausführungsform weist das Fahrerhausfrontmodul ferner eine Lenkgelenkwelle auf, die unterhalb und/oder innerhalb der Fahrerhausteilbodenstruktur angeordnet ist.

Somit können bspw. zusätzlich zum Lenkrad und zur Lenksäule, die zweckmäßig an der Fahrerhausvorderwandstruktur angebracht sind, weitere Komponenten einer Lenkvorrichtung des Nutzfahrzeugs an dem Fahrerhausfrontmodul vormontiert werden.

Zweckmäßig kann das Lenkwinkelgetriebe antreibend mit der Lenkgelenkwelle verbunden sein.

Beispielsweise kann die Lenkgelenkwelle an das Lenkwinkelgetriebe angeschlossen sein und/oder sich in einer Richtung weg von der Fahrerhausvorderwandstruktur erstrecken.

In einer Ausführungsvariante weist das Fahrerhausfrontmodul ferner einen (z. B. frontseitigen) Unterfahrschutz auf, der an der Fahrerhausvorderwandstruktur und/oder der Fahrerhausteilbodenstruktur angebracht oder darin integriert ist.

Zweckmäßig kann sich der Unterfahrschutz über eine gesamte Breite des Fahrerhausfrontmoduls erstrecken und/oder eine frontseitige Unterkante des Fahrerhausfrontmoduls bilden und/oder als ein Querträger ausgeführt sein.

In einer weiteren Ausführungsvariante weist das Fahrerhausfrontmodul ferner mindestens eine Abschleppvorrichtung auf, die in die Fahrerhausvorderwandstruktur und/oder die Fahrerhausteilbodenstruktur integriert ist.

Zweckmäßig kann die mindestens eine Abschleppvorrichtung an einer Vorderseite des Fahrerhausfrontmoduls angeordnet sein.

Beispielsweise kann die mindestens eine Abschleppvorrichtung zur Verbindung mit einer Abschleppöse und/oder als ein Gewindeloch, z. B. zum Einschrauben einer Abschleppöse, ausgebildet sein.

Es ist möglich, dass die mindestens eine Abschleppvorrichtung in den Unterfahrschutz integriert ist.

In einem Ausführungsbeispiel weist das Fahrerhausfrontmodul ferner einen Luftführungskanal (z. B. Kühlluft-Luftführungskanal) auf, der sich zwischen einer Öffnung an einer Vorderseite der Fahrerhausvorderwandstruktur und einer Öffnung an einer Unterseite der Fahrerhausteilbodenstruktur erstreckt, vorzugsweise in einer Richtung schräg nach unten.

In einer Weiterbildung weist das Fahrerhausfrontmodul ferner einen Wärmetauscher, vorzugsweise einen Klimaanlagen-Kondensator, auf, der vorzugsweise in dem Luftführungskanal in einer im Wesentlichen horizontalen Ausrichtung oder in einer geneigten Ausrichtung mit einem Winkel zu einer Horizontalachse von kleiner oder gleich 45° angeordnet ist. Dies kann insbesondere aus Bauraumgründen sinnvoll sein.

Zweckmäßig kann der Wärmetauscher innerhalb der Fahrerhausteilbodenstruktur angeordnet sein, z. B. in oder benachbart zu der Öffnung des Luftführungskanals an der Unterseite der Fahrerhausteilbodenstruktur.

In einem weiteren Ausführungsbeispiel weist das Fahrerhausfrontmodul ferner ein Gebläse auf, das in dem Luftführungskanal angeordnet ist, vorzugsweise in einer geneigten Ausrichtung.

Es ist bspw. möglich, dass das Gebläse stromaufwärts oder stromabwärts des Wärmetauschers angeordnet ist.

In einem weiteren Ausführungsbeispiel weist das Fahrerhausfrontmodul ferner mindestens einen Frontscheinwerfer, der an der Fahrerhausvorderwandstruktur angebracht ist, und/oder eine Umgebungserfassungssensorik, vorzugsweise umfassend einen Radarsensor, die an der Fahrerhausvorderwandstruktur und/oder der Fahrerhausteilbodenstruktur angebracht ist, auf.

In einer Ausführungsform weist das Fahrerhausfrontmodul mindestens eines von einer Zentralelektrik, einem Heiz-Klimagerät, einem Heizungskreislauf, einer Kühlmittelpumpe, einem Ausgleichsbehälter, einer Instrumententafel, einer Pedalerie, einer Lenksäule und einer Benutzerschnittstelle auf, das oder die vorzugsweise an der Fahrerhausvorderwandstruktur und/oder der Fahrerhausbodenstruktur angebracht ist oder sind.

In einer weiteren Ausführungsform ist die Fahrerhausvorderwandstruktur in einer Vertikalrichtung nach oben durch ein Windschutzscheibenunterkantenprofil oder ein Windschutzscheibenoberkantenprofil begrenzt oder erstreckt sich über ein Windschutzscheibenoberkantenprofil hinaus in einer Vertikalrichtung nach oben.

In einer Ausführungsvariante ist die Fahrerhausvorderwandstruktur im Wesentlichen vertikal und/oder die Fahrerhausteilbodenstruktur im Wesentlichen horizontal ausgerichtet.

In einer weiteren Ausführungsvariante erstrecken sich die Fahrerhausvorderwandstruktur und/oder die Fahrerhausteilbodenstruktur und/oder die Trägerkonstruktion im Wesentlichen entlang einer gesamten Breite des Fahrerhausfrontmoduls.

In einem Ausführungsbeispiel ist die Fahrerhausvorderwandstruktur und/oder die Fahrerhausteilbodenstruktur durch einen Gitterrahmen und/oder durch Blechpressteile gebildet.

Zweckmäßig kann ein Gitterrahmen durch in Knotenpunkten miteinander verbundene längliche Tragelemente, zum Beispiel Stabelemente, Rohrelemente und/oder Profilelemente, gebildet sein.

In einem weiteren Ausführungsbeispiel weist die Fahrerhausteilbodenstruktur und/oder die Trägerkonstruktion an deren Oberseite eines oder mehrere Fußbodenbleche auf.

Die Erfindung betrifft auch ein Nutzfahrzeug, vorzugsweise einen Lastkraftwagen, oder ein Fahrerhaus für ein Nutzfahrzeug, aufweisend ein Fahrerhaushauptmodul und ein Fahrerhausfrontmodul wie hierin offenbart. Das Fahrerhausfrontmodul ist mittels des mindestens einen Anbringungsbereichs an dem Fahrerhaushauptmodul (zum Beispiel starr) angebracht.

Es ist möglich, dass das Fahrerhausfrontmodul zusätzlich mittels mindestens einen Anbringungsbereichs der Fahrerhausvorderwandstruktur an dem Fahrerhaushauptmodul angebracht ist.

Zweckmäßig kann das Fahrerhausfrontmodul bspw. eine Fahrerhausteilbodenstruktur, Fahrerhausseitenwandstrukturen, eine Fahrerhausdachstruktur und/oder eine Fahrerhausrückwandstruktur aufweisen.

In einer Ausführungsform weist das Fahrerhaushauptmodul eine Fahrerhausteilbodenstruktur auf, die an dem Anbringungsbereich der Trägerkonstruktion der Fahrerhausteilbodenstruktur des Fahrerhausfrontmoduls angebracht ist.

In einer Weiterbildung weist die Fahrerhausteilbodenstruktur des Fahrerhaushauptmoduls eine im Wesentlichen ebene Vorderseite, die dem Anbringungsbereich zugewandt ist, auf; also insbesondere keine wesentlich vorstehenden Längsträger zur Verringerung des Unfallrisikos bei der Montage.

In einer weiteren Ausführungsform ist die Fahrerhausteilbodenstruktur des Fahrerhaushauptmoduls lediglich an der Fahrerhausteilbodenstruktur der Fahrerhausfrontmoduls angebracht.

In einer Ausführungsvariante bildet die Fahrerhausteilbodenstruktur des Fahrerhausfrontmoduls größer oder gleich 10 % und/oder kleiner oder gleich 30 %, vorzugsweise ungefähr 20 %, des (z. B. gesamten) Fahrerhausbodens des Fahrerhauses.

In einer weiteren Ausführungsvariante bildet die Fahrerhausteilbodenstruktur des Fahrerhaushauptmoduls größer oder gleich 70 % und/oder kleiner oder gleich 90 %, vorzugsweise ungefähr 80 %, des (z. B. gesamten) Fahrerhausbodens des Fahrerhauses.

Die Erfindung betrifft auch ein Verfahren zur Herstellung eines Fahrerhauses eines Nutzfahrzeugs, aufweisend ein Vorfertigen und Vormontieren eines Fahrerhausfrontmoduls wie hierin offenbart (z. B. mit dem Lenkwinkelgetriebe, der Lenkgelenkwelle, dem Unterfahrschutz, der Abschleppvorrichtung, dem Luftführungskanal, dem Gebläse, dem Wärmeübertrager, dem Frontscheinwerfer und/oder der Umgebungserfassungssensorik usw.). Das Verfahren weist ferner ein Anbringen (z. B. Verschrauben, Verkleben, Verschweißen usw.) des vorgefertigten und vormontierten Fahrerhausfrontmoduls an ein Fahrerhaushauptmodul des Fahrerhauses mittels des mindestens einen Anbringungsbereichs der Trägerkonstruktion der Fahrerhausteilbodenstruktur des Fahrerhausfrontmoduls auf.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Explosionsdarstellung eines beispielhaften Fahrerhauses gemäß der vorliegenden Offenbarung, das rein beispielhaft aus einem Fahrerhausfrontmodul und einem Fahrerhaushauptmodul gebildet ist;
- Figur 2: eine perspektivische Darstellung des beispielhaften Fahrerhausfrontmoduls, im Wesentlichen ohne Anbauteile;
- Figur 3: eine weitere perspektivische Darstellung des beispielhaften Fahrerhausfrontmoduls mit Anbauteilen bzw. Ausstattungskomponenten; und
- Figur 4: eine weitere andere perspektivische Darstellung des beispielhaften Fahrerhausfrontmoduls mit Anbauteilen bzw. Ausstattungskomponenten.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

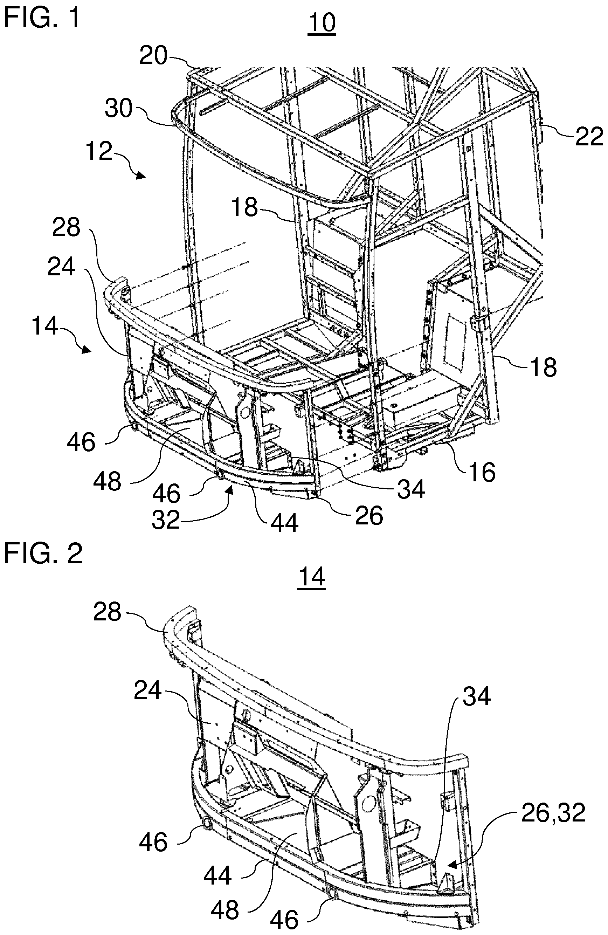

Figur 1 zeigt ein unausgestattetes Fahrerhaus 10 eines Nutzfahrzeugs, z. B. eines Lastkraftwagens, wie dargestellt ist, oder eines Omnibusses. Figur 2 zeigt ein Fahrerhausfrontmodul 14 des Nutzfahrzeugs. Das Nutzfahrzeug kann vorzugsweise ein Elektro-Nutzfahrzeug, das einzig mittels elektrischen Energie angetrieben wird, oder ein Hybrid-Nutzfahrzeug, das auch mit elektrischer Energie antreibbar ist, sein. Wie dargestellt ist, kann das Fahrerhaus 10 zur starren bzw. nicht-federnden rückseitigen Lagerung an einem Fahrzeugrahmen ausgeführt sein. Das Fahrerhaus 10 kann das Nutzfahrzeug nach unten hin begrenzen und einen Bodenabstand aufweisen, der vergleichsweise gering ist, z. B. kleiner als 50 cm oder kleiner als 40 cm, um einen bequemen Ein- und Ausstieg und eine verbesserte Sicht zu ermöglichen.

Das Fahrerhaus 10 weist ein Fahrerhaushauptmodul 12 und ein Fahrerhausfrontmodul 14 auf.

Das Fahrerhaushauptmodul 12 weist eine Fahrerhausteilbodenstruktur 16, Fahrerhausseitenwandstrukturen 18, eine Fahrerhausdachstruktur 20 und eine Fahrerhausrückwandstruktur 22 auf. Die Strukturen 16-22 sind miteinander zum Bilden eines Fahrerhausrohbaus verbunden.

Die Fahrerhausteilbodenstruktur 16 bildet nur einen Teil eines Fahrerhausbodens des Fahrerhauses auf. An einer Vorderseite weist das Fahrerhaushauptmodul 12 eine große Öffnung auf, durch die hindurch eine Vielzahl von Ausstattungskomponenten (nicht dargestellt) in das Fahrerhaushauptmodul 12 eingebracht werden können. Somit kann das Fahrerhaushauptmodul 12 vor der Montage des Fahrerhausfrontmoduls 14 vorgefertigt und vormontiert werden. Alternativ zum Fahrerhaushauptmodul 12 könnten bspw. auch mehrere separate, miteinander verbindbare Fahrerhausteilmodule vorgesehen sein, z. B. umfassend ein Fahrerhausteilbodenmodul, Fahrerhausseitenwandmodule, eine Fahrerhausdachmodul und/oder ein Fahrerhausrückwandmodul.

Das Fahrerhausfrontmodul 14 wird separat von dem Fahrerhaushauptmodul 12 vorgefertigt und vormontiert. Nach der Vormontage einer Vielzahl von Ausstattungskomponenten (nicht in den Figuren 1 und 2dargestellt) wird das Fahrerhausfrontmodul 14 an das Fahrerhaushauptmodul 12, vorzugsweise lösbar, angebracht, z. B. geschraubt, geklebt, geschweißt und/oder anderweitig gefügt.

Das Fahrerhausfrontmodul 14 weist eine Fahrerhausvorderwandstruktur (Kabinenfront) 24 und eine Fahrerhausteilbodenstruktur 26 auf.

Die Fahrerhausvorderwandstruktur 24 ist im dargestellten Ausführungsbeispiel nach oben durch ein Windschutzscheibenunterkantenprofil 28 der Fahrerhausvorderwandstruktur 24 begrenzt. Es ist allerdings bspw. auch möglich, das die Fahrerhausvorderwandstruktur nach oben durch ein Windschutzscheibenoberkantenprofil 30 der Fahrerhausvorderwandstruktur 24 begrenzt ist oder sich über das Windschutzscheibenoberkantenprofil 30 hinaus nach oben erstreckt. Im dargestellten Ausführungsbeispiel ist das Windschutzscheibenoberkantenprofil 30 in der Fahrerhausdachstruktur 20 des Fahrerhaushauptmoduls 12 umfasst.

Die Fahrerhausvorderwandstruktur 24 ist im Wesentlichen vertikal ausgerichtet. Die Fahrerhausvorderwandstruktur 24 kann bezüglich einer Vorwärtsfahrtrichtung des Nutzfahrzeugs konvex ausgeführt sein, wie dargestellt ist. Die Fahrerhausvorderwandstruktur 24 kann insbesondere an äußeren Vertikalträgern der Fahrerhausvorderwandstruktur 24 an die Fahrerhausseitenwandstrukturen 18 angebracht werden, z. B. geschweißt, geklebt, geschraubt usw.. An einem unteren Bereich der Fahrerhausvorderwandstruktur 24 ist die Fahrerhausteilbodenstruktur 26 angeordnet und mit der Fahrerhausvorderwandstruktur 24 verbunden, z. B verklebt, verschweißt, verschraubt und/oder anderweitig gefügt.

Die Fahrerhausteilbodenstruktur 26 bildet einen vorderen oder frontseitigen Teil des Fahrerhausbodens des Fahrerhauses 10 aus. Vorzugsweise bildet die Fahrerhausteilbodenstruktur 26 zwischen 10 % und 30 %, insbesondere rund 20 %, des gesamten Fahrerhausbodens aus. Damit kann die Fahrerhausteilbodenstruktur 16 des Fahrerhaushauptmoduls 12 einen hinteren Teil des Fahrerhausbodens des Fahrerhauses 10 ausbilden, z. B. zwischen 70 % und 90 %, insbesondere rund 80 %, des gesamten Fahrerhausbodens.

Die Fahrerhausteilbodenstruktur 26 weist eine Trägerkonstruktion 32 aus Längs- und Querträgern auf, die im Wesentlichen in einer Horizontalebene ausgerichtet sind. Die Trägerkonstruktion 32 weist einen oder mehrere Anbringungsbereiche 34, z. B in Form von Verschraubungspunkten, Verklebungspunkten und/oder Schweißpunkten, auf. Die Anbringungsbereiche 34 sind auf einer der Fahrerhausvorderwandstruktur 24 abgewandten Seite der Fahrerhausteilbodenstruktur 26 angeordnet. Mittels der Anbringungsbereiche 34 kann die Fahrerhausteilbodenstruktur 26 tragend an der Fahrerhausteilbodenstruktur 16 des Fahrerhaushauptmoduls 12 angebracht werden. Durch das Vorsehen der Fahrerhausteilbodenstruktur 26 am Fahrerhausfrontmodul 14 ist es nicht notwendig, Längsträger an der Fahrerhausteilbodenstruktur 16 des Fahrerhaushauptmoduls 12 in einer Richtung zum Fahrerhausfrontmodul 14 zur Montage an der Fahrerhausvorderwandstruktur 24 vorstehen zu lassen. Die Fahrerhausteilbodenstruktur 16 des Fahrerhaushauptmoduls 12 kann mit einer im Wesentlichen ebenen Vorderseite, die der Fahrerhausteilbodenstruktur 26 des Fahrerhausfrontmoduls 14 zugewandt ist, an den Anbringungsbereiche 34 montiert werden. Damit kann ein wesentlicher Unfallgefahrenpunkt bei der Montage durch vom Fahrerhaushauptmodul 12 vorstehende Teile verhindert werden.

Die Fahrerhausvorderwandstruktur 24 und die Fahrerhausteilbodenstruktur 26 sind in einer Gitterrahmenbauweise aus miteinander verbundenen Längs-, Quer und Vertikalträgern ausgeführt, was insbesondere bei kleinen Stückzahlen vorteilhaft sein kann. Alternativ oder zusätzlich kann die Fahrerhausvorderwandstruktur 24 und/oder die Fahrerhausteilbodenstruktur 26 bspw. tragende Blechpressteile aufweisen.

Dadurch, dass das Fahrerhausfrontmodul 14 die Fahrerhausteilbodenstruktur26 aufweist, entstehen neue Freiheitsgrade bezüglich der Möglichkeit der Montage weiterer Ausstattungskomponenten an dem Fahrerhausfrontmodul 14 noch vor der Montage des Fahrerhausfrontmodul 14 an das Fahrerhaushauptmodul 12.

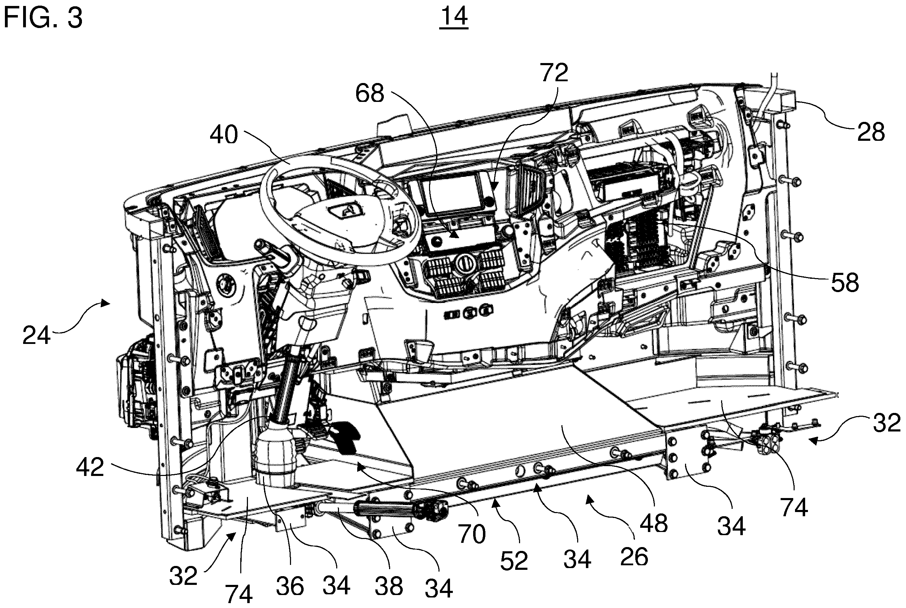

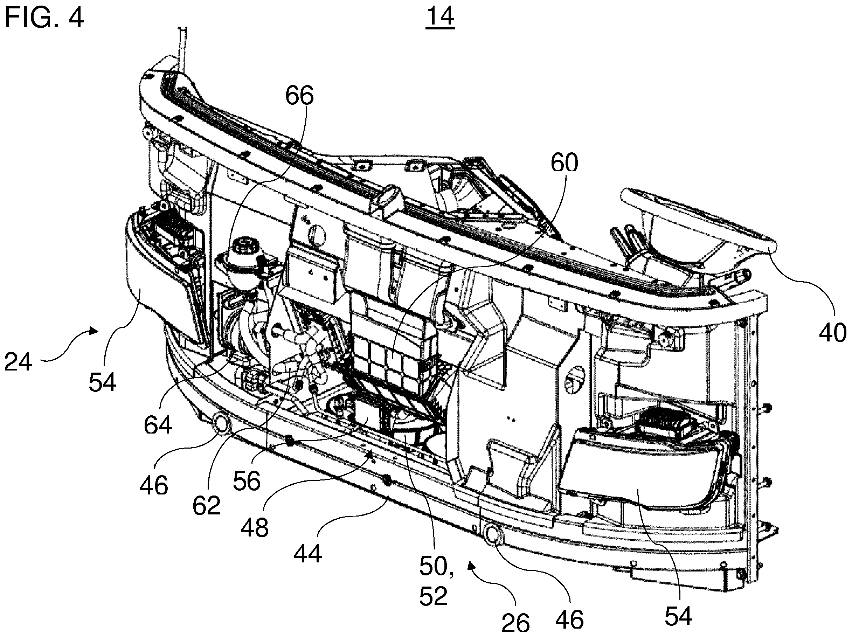

Nachfolgend sind unter Bezugnahme auf die Figuren 1 bis 4 Ausstattungskomponenten erklärt, die bevorzugt an dem Fahrerhausfrontmodul 14 vormontierbar sind. Mit jeder zusätzlich in dem Fahrerhausfrontmodul 14 umfassten Ausstattungskomponenten erhöht sich die Funktionsintegration des Fahrerhausfrontmoduls 14 und die Montage der Ausstattungskomponente wird aufgrund der guten Zugänglichkeit des Fahrerhausfrontmoduls 14 bei dessen Vormontage erleichtert.

Das Fahrerhausfrontmodul 14 kann ein Lenkwinkelgetriebe 36 und zweckmäßig zusätzlich eine daran angeschlossene Lenkgelenkwelle 38 aufweisen. Das Lenkwinkelgetriebe 36 kann an der Fahrerhausteilbodenstruktur 26 befestigt sein. Die Lenkgelenkwelle 38 kann sich durch oder unter der Fahrerhausteilbodenstruktur 26 erstrecken. Die Lenkgelenkwelle 38 wird von dem Lenkwinkelgetriebe 36 angetrieben. Aufgrund des Vorsehens der Fahrerhausteilbodenstruktur 26 können somit weitere Komponenten einer Lenkvorrichtung des Nutzfahrzeugs zusätzlich zu einem Lenkrad 40 und einer Lenksäule 42 in dem Fahrerhausfrontmodul 14 umfasst sein.

Das Fahrerhausfrontmodul 14 kann einen frontseitigen Unterfahrschutz 44 aufweisen. Der Unterfahrschutz 44 ist so in die Fahrerhausvorderwandstruktur 24 und/oder der Fahrerhausteilbodenstruktur 26 integriert, dass er eine untere Vorderkante des Fahrerhausfrontmoduls 14 bildet. Der Unterfahrschutz 44 kann als ein einteiliger oder mehrteiliger Querträger ausgebildet sein. Der Querträger kann bezüglich der Vorwärtsfahrtrichtung konvex gebogen sein.

Das Fahrerhausfrontmodul 14 kann eine oder mehrere Abschleppvorrichtungen 46 aufweisen. Die Abschleppvorrichtung 46 kann an einer Vorderseite des Fahrerhausfrontmoduls 14 angeordnet sein. Die Abschleppvorrichtung 46 kann direkt in einem Querträger der Fahrerhausvorderwandstruktur 24 und/oder der Fahrerhausteilbodenstruktur 26 integriert sein. Die Abschleppvorrichtung 46 kann bspw. als ein Gewindeloch zum Einschrauben einer Abschleppöse ausgebildet sein. Durch die bodennahe Integration der Abschleppvorrichtung kann ein Kraftfluss beim Abschleppen zweckmäßig direkt in die Fahrerhausteilbodenstruktur 26 eingeleitet werden, die die auftretenden Kräfte in die Fahrerhausteilbodenstruktur 16 weiterleitet.

Das Fahrerhausfrontmodul 14 kann einen Luftführungskanal 48 für Kühlluft aufweisen. Der Luftführungskanal 48 erstreckt sich zwischen einer Öffnung an einer Vorderseite der Fahrerhausvorderwandstruktur 24 schräg nach unten zu einer Öffnung in einer Unterseite der Fahrerhausteilbodenstruktur 26. Der Luftführungskanal 48 kann zweckmäßig bezüglich einer Querachse des Fahrerhausfrontmoduls 14 (d.h. Querachse des Nutzfahrzeugs) mittig im Fahrerhausfrontmodul 14 angeordnet sein. Im Bereich der Öffnung an der Vorderseite entsteht während der Fahrt des Nutzfahrzeugs ein Staudruckgebiet. Im Bereich der Öffnung an der Unterseite kann während der Fahrt des Nutzfahrzeugs ein Unterdruck entstehen. Im Luftführungskanal 48 können ein Gebläse 50 und ein Wärmetauscher 52 angeordnet sein. Das Gebläse 50 kann beispielsweise aktiviert werden, wenn das Nutzfahrzeug steht oder nicht genügend Kühlluft durch den Luftführungskanal 48 strömt. Der Wärmetauscher 52 kann insbesondere ein Klimaanlagen-Kondensator einer Klimaanlage des Nutzfahrzeugs sein. Aus Bauraumgründen kann es günstig sein, den Wärmetauscher 52 in einer horizontalen Ausrichtung oder einer Ausrichtung, die bis zu maximal 45° geneigt zu einer Horizontalachse ist, in dem Luftführungskanal 48 einzubauen. Der Wärmetauscher 52 kann insbesondere in oder benachbart zu der Öffnung an der Unterseite der Fahrerhausteilbodenstruktur 26 angeordnet sein, zweckmäßig im in Wesentlichen horizontaler Ausrichtung.

Das Fahrerhausfrontmodul 14 kann weitere Ausstattungskomponenten aufweisen, wie beispielsweise Frontscheinwerfer 54 und/oder eine Umgebungserfassungssensorik 56 (zum Beispiel mit einem Radarsensor, z. B. für eine automatische Distanzregelung (engl. ACC - adaptive cruise control)). Es ist auch möglich, dass das Fahrerhausfrontmodul 14 bspw. eine Zentralelektrik 58, ein Heiz-Klimagerät 60, einen Heizungskreislauf 62, eine Kühlmittelpumpe 64, einen Ausgleichsbehälter 66, eine Instrumententafel 68, eine Pedalerie (z. B. Gas- und Bremspedale) 70 und/oder eine oder mehrere Benutzerschnittstellen 72, z. B. für Radio, Navigationsgerät, Klimaanlage usw., aufweist. Die weiteren Ausstattungskomponenten können je nach bevorzugter Anordnung an der Fahrerhausvorderwandstruktur 24 und/oder der Fahrerhausteilbodenstruktur 26 angebracht sein.

Wie dargestellt ist, kann die Fahrerhausteilbodenstruktur 26 an deren Oberseite zusätzlich eines oder mehrere Fußbodenbleche 74 aufweisen. Beispielsweise können ein fahrerseitiges Fußbodenblech 74 und ein beifahrerseitiges Fußbodenblech 74 umfasst sein. Das fahrerseitige Fußbodenblech 74 kann eine Aussparung für die Lenkvorrichtung aufweisen. Zwischen dem fahrerseitigen und dem beifahrerseitigen Fußbodenblech kann der Luftführungskanal 48 angeordnet sein.

Gemäß einem beispielhaften Verfahren zur Herstellung des Fahrerhauses 10 wird das Fahrerhausfrontmodul 14 separat vorgefertigt und vormontiert, vorzugsweise mit allen Ausstattungskomponenten 36 bis 74. Ebenso kann das Fahrerhaushauptmodul 12 separat vorgefertigt und mit entsprechenden Ausstattungskomponenten vormontiert sein. Das ausgestattete Fahrerhausfrontmodul 14 wird anschließend an das ausgestattete Fahrerhaushauptmodul 12 angebracht, z. B. verschraubt, verklebt und/oder verschweißt. Dabei wird zweckmäßig der mindestens eine Anbringungsbereich 34 der Fahrerhausteilbodenstruktur 26 des Fahrerhausfrontmoduls 14 an der Fahrerhausbodenstruktur 16 des Fahrerhaushauptmoduls 12 angebracht.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Fahrerhausvorderwandstruktur und/oder der Fahrerhausteilbodenstruktur des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweilige bevorzugte engere Außengrenzen des jeweiligen Bereichs.

### Bezugszeichenliste

- 10: Fahrerhaus
- 12: Fahrerhaushauptmodul
- 14: Fahrerhausfrontmodul
- 16: Fahrerhausteilbodenstruktur
- 18: Fahrerhausseitenwandstruktur
- 20: Fahrerhausdachstruktur
- 22: Fahrerhausrückwandstruktur
- 24: Fahrerhausvorderwandstruktur
- 26: Fahrerhausteilbodenstruktur
- 28: Windschutzscheibenunterkantenprofil
- 30: Windschutzscheibenoberkantenprofil
- 32: Trägerkonstruktion
- 34: Anbringungsbereich
- 36: Lenkwinkelgetriebe
- 38: Lenkgelenkwelle
- 40: Lenkrad
- 42: Lenksäule
- 44: Unterfahrschutz
- 46: Abschleppvorrichtung
- 48: Luftführungskanal
- 50: Gebläse
- 52: Wärmetauscher
- 54: Frontscheinwerfer
- 56: Umgebungserfassungssensorik
- 58: Zentralelektrik
- 60: Heiz-Klimagerät
- 62: Heizungskreislauf
- 64: Kühlmittelpumpe
- 66: Ausgleichsbehälter
- 68: Instrumententafel
- 70: Pedalerie
- 72: Benutzerschnittstelle
- 74: Fußbodenblech

## Patentansprüche

1. Fahrerhausfrontmodul (14) für ein Fahrerhaus (10) eines Nutzfahrzeugs, wobei das Fahrerhausfrontmodul (14) vorgefertigt und vormontiert ist und aufweist:
eine Fahrerhausvorderwandstruktur (24); und
eine Fahrerhausteilbodenstruktur (26), die mit der Fahrerhausvorderwandstruktur (24) verbunden ist, teilweise einen Fahrerhausboden bildet und eine Trägerkonstruktion (32) mit mindestens einem Anbringungsbereich (34) zur tragenden Anbringung des Fahrerhausfrontmoduls (14) an eine weitere Fahrerhausteilbodenstruktur (16) des Fahrerhauses (10) aufweist.

2. Fahrerhausfrontmodul (14) nach Anspruch 1, wobei:
die Trägerkonstruktion (32) einen oder mehrere Längsträger und/oder Querträger und/oder eines oder mehrere Tragbleche aufweist; und/oder
der mindestens eine Anbringungsbereich (34) an einem freien Ende der Trägerkonstruktion (32) und/oder an einem der Fahrerhausvorderwandstruktur (24) entgegengesetzten Ende der Trägerkonstruktion (32) angeordnet ist.

3. Fahrerhausfrontmodul (14) nach Anspruch 1 oder Anspruch 2, ferner aufweisend:
mindestens eine Ausstattungskomponente, die in oder an der Fahrerhausteilbodenstruktur (26) und/oder der Trägerkonstruktion (32) angebracht ist.

4. Fahrerhausfrontmodul (14) nach einem der vorherigen Ansprüche, ferner aufweisend:
ein Lenkwinkelgetriebe (36), das an der Fahrerhausteilbodenstruktur (26) angebracht ist.

5. Fahrerhausfrontmodul (14) nach einem der vorherigen Ansprüche, ferner aufweisend:
eine Lenkgelenkwelle (38), die unterhalb und/oder innerhalb der Fahrerhausteilbodenstruktur (26) angeordnet ist.

6. Fahrerhausfrontmodul (14) nach einem der vorherigen Ansprüche, ferner aufweisend:
einen Unterfahrschutz (44), der an der Fahrerhausvorderwandstruktur (24) und/oder der Fahrerhausteilbodenstruktur (26) angebracht oder integriert ist.

7. Fahrerhausfrontmodul (14) nach einem der vorherigen Ansprüche, ferner aufweisend:
mindestens eine Abschleppvorrichtung (46), die in die Fahrerhausvorderwandstruktur (24) und/oder die Fahrerhausteilbodenstruktur (26) integriert ist.

8. Fahrerhausfrontmodul (14) nach einem der vorherigen Ansprüche, ferner aufweisend:
einen Luftführungskanal (48), der sich zwischen einer Öffnung an einer Vorderseite der Fahrerhausvorderwandstruktur (24) und einer Öffnung an einer Unterseite der Fahrerhausteilbodenstruktur (26) erstreckt, vorzugsweise in einer Richtung schräg nach unten.

9. Fahrerhausfrontmodul (14) nach Anspruch 8, ferner aufweisend:
einen Wärmetauscher (52), vorzugsweise einen Klimaanlagen-Kondensator, der in dem Luftführungskanal (48) in einer im Wesentlichen horizontalen Ausrichtung oder in einer geneigten Ausrichtung mit einem Winkel zu einer Horizontalachse von kleiner oder gleich 45° angeordnet ist; und/oder
ein Gebläse (50), das in dem Luftführungskanal (48) angeordnet ist, vorzugsweise in einer geneigten Ausrichtung.

10. Fahrerhausfrontmodul (14) nach einem der vorherigen Ansprüche, ferner aufweisend:
mindestens einen Frontscheinwerfer (54), der an der Fahrerhausvorderwandstruktur (24) angebracht ist; und/oder
eine Umgebungserfassungssensorik (56), vorzugsweise umfassend einen Radarsensor, die an der Fahrerhausvorderwandstruktur (24) und/oder der Fahrerhausteilbodenstruktur (26) angebracht ist.

11. Fahrerhausfrontmodul (14) nach einem der vorherigen Ansprüche, ferner aufweisend mindestens eines von:
einer Zentralelektrik (58), einem Heiz-Klimagerät (60), einem Heizungskreislauf (62), einer Kühlmittelpumpe (64), einem Ausgleichsbehälter (66), einer Instrumententafel (68), einer Pedalerie (70), einer Lenksäule (42) und einer Benutzerschnittstelle (72), das oder die an der Fahrerhausvorderwandstruktur (24) und/oder der Fahrerhausteilbodenstruktur angebracht ist oder sind.

12. Fahrerhausfrontmodul (14) nach einem der vorherigen Ansprüche, wobei
die Fahrerhausvorderwandstruktur (24) in einer Vertikalrichtung nach oben durch ein Windschutzscheibenunterkantenprofil (28) oder ein Windschutzscheibenoberkantenprofil (30) begrenzt ist oder sich über ein Windschutzscheibenoberkantenprofil (30) in einer Vertikalrichtung nach oben hinaus erstreckt, und/oder
die Fahrerhausvorderwandstruktur (24) im Wesentlichen vertikal und/oder die Fahrerhausteilbodenstruktur (26) im Wesentlichen horizontal ausgerichtet ist; und/oder
die Fahrerhausvorderwandstruktur (24) und/oder die Fahrerhausteilbodenstruktur (26) und/oder die Trägerkonstruktion (32) sich im Wesentlichen entlang einer gesamten Breite des Fahrerhausfrontmoduls (14) erstrecken; und/oder
die Fahrerhausvorderwandstruktur (24) und/oder die Fahrerhausteilbodenstruktur (26) durch einen Gitterrahmen und/oder durch Blechpressteile gebildet ist; und/oder
die Fahrerhausteilbodenstruktur (26) und/oder die Trägerkonstruktion (32) an deren Oberseite eines oder mehrere Fußbodenbleche (74) aufweist.

13. Nutzfahrzeug, vorzugsweise Lastkraftwagen, oder Fahrerhaus (10) für ein Nutzfahrzeug, aufweisend:
ein Fahrerhaushauptmodul (12); und
ein Fahrerhausfrontmodul (14) gemäß einem der vorherigen Ansprüche, das mittels des mindestens einen Anbringungsbereichs (34) an dem Fahrerhaushauptmodul (12) angebracht ist.

14. Nutzfahrzeug oder Fahrerhaus (10) nach Anspruch 13, wobei:
das Fahrerhaushauptmodul (12) eine Fahrerhausteilbodenstruktur (26) aufweist, die an dem Anbringungsbereich (34) der Trägerkonstruktion (32) der Fahrerhausteilbodenstruktur (26) des Fahrerhausfrontmoduls (14) angebracht ist,
wobei:
die Fahrerhausteilbodenstruktur (16) des Fahrerhaushauptmoduls (12) eine im Wesentlichen ebene Vorderseite, die dem Anbringungsbereich (34) zugewandt ist, aufweist, und/oder
die Fahrerhausteilbodenstruktur (16) des Fahrerhaushauptmoduls (12) lediglich an der Fahrerhausteilbodenstruktur (26) der Fahrerhausfrontmoduls (14) angebracht ist; und/oder
die Fahrerhausteilbodenstruktur (26) des Fahrerhausfrontmoduls (14) größer oder gleich 10 % und/oder kleiner oder gleich 30 %, vorzugsweise ungefähr 20 %, des Fahrerhausbodens des Fahrerhauses (10) bildet; und/oder
die Fahrerhausteilbodenstruktur (16) des Fahrerhaushauptmoduls (12) größer oder gleich 70 % und/oder kleiner oder gleich 90 %, vorzugsweise ungefähr 80 %, des Fahrerhausbodens des Fahrerhauses (10) bildet.

15. Verfahren zur Herstellung eines Fahrerhauses (10) eines Nutzfahrzeugs, aufweisend:
Vorfertigen und Vormontieren eines Fahrerhausfrontmoduls (14) nach einem der Ansprüche 1 bis 12; und
Anbringen des vorgefertigten und vormontierten Fahrerhausfrontmoduls (14) an ein Fahrerhaushauptmodul (12) des Fahrerhauses (10) mittels des mindestens einen Anbringungsbereichs (34) der Trägerkonstruktion (32) der Fahrerhausteilbodenstruktur (26) des Fahrerhausfrontmoduls (14).

## Claims

1. A driver's cab front module (14) for a driver's cab (10) of a utility vehicle, wherein the driver's cab front module (14) is premanufactured and preassembled and has:
a driver's cab front wall structure (24); and
a driver's cab partial floor structure (26) which is connected to the driver's cab front wall structure (24), partially forms a driver's cab floor and has a support construction (32) with at least one attachment region (34) for the supporting attachment of the driver's cab front module (14) to a further driver's cab partial floor structure (16) of the driver's cab (10).

2. The driver's cab front module (14) according to Claim 1, wherein:
the support construction (32) has one or more longitudinal members and/or crossmembers and/or one or more supporting plates; and/or
the at least one attachment region (34) is arranged at a free end of the support construction (32) and/or at an end of the support construction (32) opposite the driver's cab front wall structure (24).

3. The driver's cab front module (14) according to Claim 1 or Claim 2, furthermore having:
at least one equipment component which is attached in or to the driver's cab partial floor structure (26) and/or the support construction (32).

4. The driver's cab front module (14) according to one of the preceding claims, furthermore having:
a steering angle mechanism (36) which is attached to the driver's cab partial floor structure (26).

5. The driver's cab front module (14) according to one of the preceding claims, furthermore having:
a steering propeller shaft (38) which is arranged below and/or inside the driver's cab partial floor structure (26).

6. The driver's cab front module (14) according to one of the preceding claims, furthermore having:
an underride guard (44) which is attached to or integrated on the driver's cab front wall structure (24) and/or the driver's cab partial floor structure (26) .

7. The driver's cab front module (14) according to one of the preceding claims, furthermore having:
at least one towing device (46) which is integrated in the driver's cab front wall structure (24) and/or the driver's cab partial floor structure (26).

8. The driver's cab front module (14) according to one of the preceding claims, furthermore having:
an air duct (48) which extends, preferably in a direction obliquely downwards, between an opening on a front side of the driver's cab front wall structure (24) and an opening on a lower side of the driver's cab partial floor structure (26).

9. The driver's cab front module (14) according to Claim 8, furthermore having:
a heat exchanger (52), preferably an air conditioning system condenser which is arranged in the air duct (48) in a substantially horizontal orientation or in an inclined orientation at an angle to a horizontal axis of less than or equal to 45°; and/or
a fan (50) which is arranged in the air duct (48), preferably in an inclined orientation.

10. The driver's cab front module (14) according to one of the preceding claims, furthermore having:
at least one front headlight (54) which is attached to the driver's cab front wall structure (24); and/or
an environment-detecting sensor system (56), preferably comprising a radar sensor, which environment-detecting sensor system is attached to the driver's cab front wall structure (24) and/or to the driver's cab partial floor structure (26).

11. The driver's cab front module (14) according to one of the preceding claims, furthermore having at least one of the following:
a central electrical system (58), a heating air-conditioning unit (60), a heating circuit (62), a coolant pump (64), a compensating tank (66), an instrument panel (68), pedals (70), a steering column (42), and a user interface (72), which is or which are attached to the driver's cab front wall structure (24) and/or to the driver's cab partial floor structure.

12. The driver's cab front module (14) according to one of the preceding claims, wherein
the driver's cab front wall structure (24) is delimited upwards in a vertical direction by a windscreen lower edge profile (28) or a windscreen upper edge profile (30) or extends upwards in a vertical direction beyond a windscreen upper edge profile (30), and/or
the driver's cab front wall structure (24) is oriented substantially vertically and/or the driver's cab partial floor structure (26) is oriented substantially horizontally; and/or
the driver's cab front wall structure (24) and/or the driver's cab partial floor structure (26) and/or the support construction (32) substantially extend along an entire width of the driver's cab front module (14); and/or
the driver's cab front wall structure (24) and/or the driver's cab partial floor structure (26) are/is formed by a lattice frame and/or by sheet-metal pressed parts; and/or
the driver's cab partial floor structure (26) and/or the support construction (32) have/has one or more floor plates (74) on the upper side thereof.

13. A utility vehicle, preferably lorry, or driver's cab (10) for a utility vehicle, having:
a driver's cab main module (12); and
a driver's cab front module (14) according to one of the preceding claims which is attached to the driver's cab main module (12) by means of the at least one attachment region (34).

14. The utility vehicle or driver's cab (10) according to Claim 13, wherein:
the driver's cab main module (12) has a driver's cab partial floor structure (26) which is attached to the attachment region (34) of the support construction (32) of the driver's cab partial floor structure (26) of the driver's cab front module (14),
wherein:
the driver's cab partial floor structure (16) of the driver's cab main module (12) has a substantially flat front side which faces the attachment region (34), and/or
the driver's cab partial floor structure (16) of the driver's cab main module (12) is attached only to the driver's cab partial floor structure (26) of the driver's cab front module (14); and/or
the driver's cab partial floor structure (26) of the driver's cab front module (14) forms greater than or equal to 10% and/or less than or equal to 30%, preferably approximately 20%, of the driver's cab floor of the driver's cab (10); and/or
the driver's cab partial floor structure (16) of the driver's cab main module (12) forms greater than or equal to 70% and/or less than or equal to 90%, preferably approximately 80%, of the driver's cab floor of the driver's cab (10).

15. A method for producing a driver's cab (10) of a utility vehicle, comprising:
premanufacturing and preassembling a driver's cab front module (14) according to one of Claims 1 to 12; and
attaching the premanufactured and preassembled driver's cab front module (14) to a driver's cab main module (12) of the driver's cab (10) by means of the at least one attachment region (34) of the support construction (32) of the driver's cab partial floor structure (26) of the driver's cab front module (14).

## Revendications

1. Module frontal de cabine de conducteur (14) pour une cabine de conducteur (10) d'un véhicule utilitaire, le module frontal de cabine de conducteur (14) étant préfabriqué et préassemblé et présentant :
une structure de paroi avant de cabine de conducteur (24) ; et
une structure de plancher partiel de cabine de conducteur (26), qui est reliée à la structure de paroi avant de cabine de conducteur (24), forme partiellement un plancher de cabine de conducteur et présente une construction de support (32) comprenant au moins une zone de fixation (34) pour la fixation portante du module frontal de cabine de conducteur (14) à une autre structure de plancher partiel de cabine de conducteur (16) de la cabine de conducteur (10).

2. Module frontal de cabine de conducteur (14) selon la revendication 1, dans lequel :
la construction de support (32) présente un ou plusieurs supports longitudinaux et/ou supports transversaux et/ou une ou plusieurs tôles de support ; et/ou
l'au moins une zone de fixation (34) est agencée à une extrémité libre de la construction de support (32) et/ou à une extrémité de la construction de support (32) opposée à la structure de paroi avant de cabine de conducteur (24).

3. Module frontal de cabine de conducteur (14) selon la revendication 1 ou la revendication 2, comprenant en outre :
au moins un composant d'équipement, qui fixé dans ou sur la structure de plancher partiel de cabine de conducteur (26) et/ou la construction de support (32).

4. Module frontal de cabine de conducteur (14) selon l'une quelconque des revendications précédentes, comprenant en outre :
un mécanisme de direction angulaire (36), qui est fixé sur la structure de plancher partiel de cabine de conducteur (26).

5. Module frontal de cabine de conducteur (14) selon l'une quelconque des revendications précédentes, comprenant en outre :
un arbre de direction articulé (38), qui est agencé en dessous et/ou à l'intérieur de la structure de plancher partiel de cabine de conducteur (26).

6. Module frontal de cabine de conducteur (14) selon l'une quelconque des revendications précédentes, comprenant en outre :
une protection anti-encastrement (44), qui est fixée sur ou intégrée à la structure de paroi avant de cabine de conducteur (24) et/ou à la structure de plancher partiel de cabine de conducteur (26).

7. Module frontal de cabine de conducteur (14) selon l'une quelconque des revendications précédentes, comprenant en outre :
au moins un dispositif de remorquage (46), qui est intégré dans la structure de paroi avant de cabine de conducteur (24) et/ou la structure de plancher partiel de cabine de conducteur (26).

8. Module frontal de cabine de conducteur (14) selon l'une quelconque des revendications précédentes, comprenant en outre :
un canal de guidage d'air (48), qui s'étend entre une ouverture sur un côté avant de la structure de paroi avant de cabine de conducteur (24) et une ouverture sur un côté inférieur de la structure de plancher partiel de cabine de conducteur (26), de préférence dans une direction oblique vers le bas.

9. Module frontal de cabine de conducteur (14) selon la revendication 8, comprenant en outre :
un échangeur de chaleur (52), de préférence un condenseur d'installation de climatisation, qui est agencé dans le canal de guidage d'air (48) selon une orientation essentiellement horizontale ou selon une orientation inclinée avec un angle par rapport à un axe horizontal inférieur ou égal à 45° ; et/ou
une soufflante (50), qui est agencée dans le canal de guidage d'air (48), de préférence selon une orientation inclinée.

10. Module frontal de cabine de conducteur (14) selon l'une quelconque des revendications précédentes, comprenant en outre :
au moins un phare avant (54), qui est fixé sur la structure de la paroi avant de cabine de conducteur (24) ; et/ou
un capteur de détection de l'environnement (56), comprenant de préférence un capteur radar, qui est fixé sur la structure de la paroi avant de cabine de conducteur (24) et/ou sur la structure de plancher partiel de cabine de conducteur (26).

11. Module frontal de cabine de conducteur (14) selon l'une quelconque des revendications précédentes, comprenant en outre au moins un des éléments suivants :
un système électrique central (58), un appareil de chauffage et de climatisation (60), un circuit de chauffage (62), une pompe d'agent réfrigérant (64), un contenant d'équilibrage (66), un tableau de bord (68), un pédalier (70), une colonne de direction (42) et une interface utilisateur (72), qui est ou sont fixés sur la structure de paroi avant de cabine de conducteur (24) et/ou sur la structure de plancher partiel de cabine de conducteur.

12. Module frontal de cabine de conducteur (14) selon l'une quelconque des revendications précédentes, dans lequel
la structure de paroi avant de cabine de conducteur (24) est délimitée dans une direction verticale vers le haut par un profilé de bord inférieur de pare-brise (28) ou un profilé de bord supérieur de pare-brise (30) ou s'étend au-delà d'un profilé de bord supérieur de pare-brise (30) dans une direction verticale vers le haut, et/ou
la structure de paroi avant de cabine de conducteur (24) est orientée essentiellement verticalement et/ou la structure de plancher partiel de cabine de conducteur (26) est orientée essentiellement horizontalement ; et/ou
la structure de paroi avant de cabine de conducteur (24) et/ou la structure de plancher partiel de cabine de conducteur (26) et/ou la construction de support (32) s'étendent essentiellement le long d'une largeur totale du module frontal de cabine de conducteur (14) ; et/ou
la structure de paroi avant de cabine de conducteur (24) et/ou la structure de plancher partiel de cabine de conducteur (26) sont formées par un cadre en treillis et/ou par des pièces façonnées en tôle ; et/ou
la structure de plancher partiel de cabine de conducteur (26) et/ou la construction de support (32) présentent sur leur côté supérieur une ou plusieurs tôles de plancher (74).

13. Véhicule utilitaire, de préférence camion, ou cabine de conducteur (10) pour un véhicule utilitaire, comprenant :
un module principal de cabine de conducteur (12) ; et
un module frontal de cabine de conducteur (14) selon l'une quelconque des revendications précédentes, qui est fixé sur le module principal de cabine de conducteur (12) au moyen de l'au moins une zone de fixation (34).

14. Véhicule utilitaire ou cabine de conducteur (10) selon la revendication 13, dans lequel ou dans laquelle :
le module principal de cabine de conducteur (12) présente une structure de plancher partiel de cabine de conducteur (26), qui est fixée sur la zone de fixation (34) de la construction de support (32) de la structure de plancher partiel de cabine de conducteur (26) du module frontal de cabine de conducteur (14),
dans lequel ou dans laquelle :
la structure de plancher partiel de cabine de conducteur (16) du module principal de cabine de conducteur (12) présente un côté avant essentiellement plan, qui fait face à la zone de fixation (34), et/ou
la structure de plancher partiel de cabine de conducteur (16) du module principal de cabine de conducteur (12) est fixée uniquement sur la structure de plancher partiel de cabine de conducteur (26) du module frontal de cabine de conducteur (14) ; et/ou
la structure de plancher partiel de cabine de conducteur (26) du module frontal de cabine de conducteur (14) est supérieure ou égale à 10 % et/ou inférieure ou égale à 30 %, de préférence approximativement 20 %, du plancher de cabine de conducteur de la cabine de conducteur (10) ; et/ou
la structure de plancher partiel de cabine de conducteur (16) du module principal de cabine de conducteur (12) est supérieure ou égale à 70 % et/ou inférieure ou égale à 90 %, de préférence approximativement 80 %, du plancher de cabine de conducteur de la cabine de conducteur (10).

15. Procédé de fabrication d'une cabine de conducteur (10) d'un véhicule utilitaire, comprenant :
la préfabrication et le pré-assemblage d'un module frontal de cabine de conducteur (14) selon l'une quelconque des revendications 1 à 12 ; et
la fixation du module frontal de cabine de conducteur préfabriqué et préassemblé (14) à un module principal de cabine de conducteur (12) de la cabine de conducteur (10) au moyen de l'au moins une zone de fixation (34) de la construction de support (32) de la structure de plancher partiel de cabine de conducteur (26) du module frontal de cabine de conducteur (14).
